# EUROPEAN PATENT SPECIFICATION

(11) **EP 2 305 048 B1**
(45) Date of publication and mention of the grant of the patent: **13.01.2016**
(21) Application number: 09770129.6
(22) Date of filing: 23.06.2009
(51) Int. Cl.: A23L 1/221, A23L 1/015, A23L 1/237, A23L 2/56

(54) **TASTE-IMPROVING AGENT FOR POTASSIUM SALT OR POTASSIUM SALT-CONTAINING FOOD OR DRINK**
GESCHMACKSVERBESSERER FÜR KALIUMSALZ ODER KALIUMSALZHALTIGES NAHRUNGSMITTEL ODER GETRÄNK
AGENT D'AMÉLIORATION DU GOÛT POUR SEL DE POTASSIUM OU PRODUIT ALIMENTAIRE OU BOISSON CONTENANT UN SEL DE POTASSIUM

(30) Priority: 25.06.2008 JP 2008165339
(43) Date of publication of application: 06.04.2011
(73) Proprietor: Ogawa & Co., Ltd., Tokyo 103-0023 (JP)
(72) Inventor: MIYAZAWA, Toshio, Tokyo 103 - 0023 (JP); YAMAGUCHI, Tsuyoshi, Urayasu-shi Chiba 279-0032 (JP); MATSUMOTO, Katsuyuki, Urayasu-shi Chiba 279-0032 (JP); MURANISHI, Shuichi, Urayasu-shi Chiba 279-0032 (JP)
(74) Representative: Jacobi, Markus Alexander
(86) International application number: PCT/JP2009/061355
(87) International publication number: WO 2009/157419

(56) References cited:
- JP-A- 6 335 361
- JP-A- 2001 321 115
- JP-A- 2002 186 448
- JP-A- 2006 104 071
- JP-A- 2006 296 357
- JP-A- 2006 296 357
- JP-B- 48 035 465
- US-A1- 2008 050 500
- DATABASE WPI Week 200662 Thomson Scientific, London, GB; AN 2006-601989 XP002728640, & WO 2006/087991 A1 (OGAWA&CO LTD) 24 August 2006 (2006-08-24)
- DATABASE WPI Week 197344 Thomson Scientific, London, GB; AN 1973-67267U XP002728641, & JP S48 35465 B (HAUS SHOKUHIN KOGYO CO LT) 1973

## Description

### Technical Field

The present invention relates to an agent for improving taste, and especially it relates to an agent for improving taste with an excellent ability to reduce unpleasant tastes such as metallic tastes derived from potassium salts in potassium salt-containing foods or drinks, without reducing their saltiness and without altering the original flavor profile of the foods or drinks.

### Background Art

Sodium chloride modifies flavor of foods or drink by imparting saltiness or improves their storage life or physical properties, and it is an indispensable material in the food industry. Excessive salt intake, however, results in accumulation of sodium in the body and an increased water content in the blood vessels, thus raising blood pressure. The close relationship between excessive salt ingestion and hypertension has become common knowledge, while it is also a well-known fact that excessive salt is a cause of other complications (such as cardiac disease and renal disease), and therefore reduced consumption of salt is desirable as the population continues to age.

Global efforts to reduce salt intake have therefore been enacted in recent years, and the recommended target consumption is 6 g per day in the U.S. and Europe. The Ministry of Health, Labour and Welfare in Japan, on the other hand, advises a salt intake of no greater than 10 g per day, although the "guidelines for treatment of hypertension" by the Japanese Society of Hypertension indicates a preferred salt intake of no greater than 6 g per day, based on the WHO and U.S./European standard. According to national nutrition surveys in recent years, however, Japanese intake of salt is approximately 11-14 g per day.

There have been disclosed in recent years, therefore, attempts to reduce the amount of salt in foods and drinks, and specifically, attempts to reduce the use of salt by enhancing salt taste and strong saltiness. One method known for enhancing salt taste without impairing the original taste of foods or drinks involves enhancing salt taste with spilanthol-containing compositions (Patent document 1). When sodium content is reduced by this method it is possible to enhance salt taste to some degree, but since there is no enhancing effect on the overall base flavor, it has not been possible to supplement the lack of overall flavor produced by reducing the sodium content.

On the other hand, methods for reducing sodium content in foods or drinks have also been proposed wherein part of the sodium in the salt is replaced with potassium chloride, magnesium chloride or calcium chloride which have salt taste, in order to reduce the relative amount of sodium (Patent document 2), but these all produce unpleasant tastes deriving from the materials used, such as bitterness, acrid taste or metallic taste, and therefore the amounts and fields of use have been limited.

Numerous attempts have been made to enhance the taste of potassium chloride by adding inorganic salts or seasonings, sweeteners and the like to potassium chloride. The components known to enhance the taste of potassium chloride include glutamate and nucleic acid-based gustatory substances (Patent document 3, Patent document 4), citric acid salts (Patent document 5), autolytic yeast (Patent document 6), solid powder "nigari" (magnesium chloride) (Patent document 7), konbu extract (Patent document 8), tea, dokudami, wheat and barley, guava and buckwheat (Patent document 9), and mushroom-derived components (Patent document 10). There have also been proposed techniques for mixing and granulating binders with sodium chloride and potassium chloride (Patent document 11), and methods for improving the mouthfeel of potassium chloride by combining potassium chloride with cellulosic substances and the like (Patent document 12). However, unpleasant tastes unique to these materials are also produced, and thus improvements in these methods are highly desired.

Still, the prior art mentioned above is limited to uses for flavors and unpleasant tastes of inorganic salts, seasonings and the like that are combined with potassium chloride, and sufficient taste enhancement of potassium chloride still remains to be achieved in most cases, while agents for improving tastes for potassium-containing foods or drinks with a sufficient level of quality have not yet been developed.

### [Prior art documents]

### [Patent documents]

[Patent document 1] Japanese Examined Patent Publication SHO No. 48-35465
[Patent document 2] Japanese Unexamined Patent Publication SHO No. 59-198953
[Patent document 3] Japanese Unexamined Patent Publication SHO No. 58-89160
[Patent document 4] Japanese Unexamined Patent Publication SHO No. 58-94368
[Patent document 5] Japanese Unexamined Patent Publication HEI No. 6-189709
[Patent document 6] Japanese Unexamined Patent Publication SHO No. 56-55177
[Patent document 7] Japanese Unexamined Patent Publication SHO No. 59-198953
[Patent document 8] Japanese Unexamined Patent Publication HEI No. 6-7111
[Patent document 9] Japanese Unexamined Patent Publication HEI No. 6-335361
[Patent document 10] Japanese Unexamined Patent Publication HEI No. 7-115933
[Patent document 11] Japanese Unexamined Patent Publication SHO No. 59-66858
[Patent document 12] Japanese Unexamined Patent Publication SHO No. 61-282052
[Patent document 13] Japanese Patent Publication JP 2006-223104
[Patent document 14] Japanese Patent Publication JP 2006-296357
[Patent document 15] Japanese Patent JP 6-335361

### Summary of Invention

### Problems to be Solved by the Invention

It is an object of the present invention to improve the unpleasant taste characteristic of potassium salts without affecting the original flavor of foods or drinks and to increase the value of potassium salts as salt substitutes, in order to provide means and salt compositions for reducing sodium in foods and drinks. It is another object of the invention to provide an agent for improving taste with an enhancing effect on unpleasant tastes of salt compositions.

### Means for Solving the Problems

As a result of much diligent research directed toward solving the problems of the prior art, the present inventors have found that when one or more of the following: quinic acid or a quinic acid-containing composition, spilanthol or a spilanthol-containing plant extract or plant essential oil, or an *Allium* plant extract, is added to a potassium salt or a potassium salt-containing food or drink, the unpleasant tastes such as acrid taste and metallic taste characteristic of potassium salts are improved while the salt flavor and taste are enhanced, and the invention has been completed upon this finding.

The present invention is defined as in the appended claims.

### Effect of the Invention

The agent for improving taste according to the invention can improve unpleasant tastes such as the metallic taste or acrid taste characteristic of potassium salts while enhancing salt taste, without affecting the original flavor of foods or drinks, and therefore its use in reduced-sodium foods is easier than the prior art, and it can increase the value of potassium salts as salt substitutes.

### Description of Embodiments

### [A] Quinic acid or quinic acid-containing composition

The quinic acid (1,3,4,5-tetrahydroxycyclohexane-1-carboxylic acid) used in the agent for improving taste according to the invention is abundant in cranberry juice and also widely distributed among plants in the form of quinic acid derivatives such as chlorogenic acid, and it can be obtained by methods such as extraction from plants. It can also be chemically synthesized, and is commercially available as reagents and the like. According to the invention, commercially available quinic acid may be used directly as a taste-improving agent, but considering that it is to be used as a taste-improving agent in a food or drink, it is preferred to use a composition containing quinic acid obtained from an edible plant material such as juice, tea or coffee, and it is especially preferred to use tea leaves or coffee beans as starting material because of their high quinic acid content and ready availability. Specifically, an agent for improving taste according to the invention may be obtained from tea leaves and coffee beans in the following manner.

### (1) Tea leaf extract containing quinic acid

### a) Starting material

The tea leaves used as starting material may be the buds, leaves or stalk of the *Camellia sinensis* var. plant, which may be used without regard to the variety or locality and may be either raw or pretreated. The tea may be pretreated by any method such as a non-fermenting, partial fermenting or fermenting method. Unfermented tea includes green tea (roasted tea, gyokuro, kabusecha, coarse green tea, tamaryokucha, powdered tea, hoj icha and the like), semi-fermented teas include oolong tea and houshucha, and fermented tea includes black tea. Any of these tea leaves may be used as starting material, but black tea leaves are preferred as starting material from the viewpoint of quinic acid yield.

### b) Extraction

The tea leaf starting material is extracted using water and/or a polar organic solvent.

The polar organic solvent used may be a solvent such as methanol, ethanol, 2-propanol or acetone, any one or a mixture of two or more of which may be used, and if necessary it may be used in the form of an aqueous solution in admixture with water. The solvent used for extraction is preferably water or a C2-4 aliphatic alcohol such as ethanol, propanol or butanol from the viewpoint of safety for the human body and manageability, and most preferred are water or ethanol, or a mixture thereof. The amount of solvent used for the extraction may be selected as desired, but for most purposes a 1-30 fold amount (by weight) and preferably a 5-20 fold amount, is used with respect to the tea leaves. The temperature and time for extraction may be set as desired and is not particularly restricted, with 1-12 hours and preferably 1-2 hours at 10-100°C being suitable.

The insoluble matter is removed from the extract obtained by extraction from the tea leaves, and if necessary it is concentrated and then subjected to the following purifying treatment.

### c) Purification

The extract obtained in the extraction step may be purified by contact with an adsorbent such as active carbon, silica gel or a synthetic adsorbent, to obtain an agent for improving taste according to the invention.

The adsorbent is preferably a porous body with an area-to-weight ratio of 300-600 m²/g and a pore size of 50-300 angstrom. It may be used without limitation to the type of active carbon, silica gel or synthetic adsorbent.

A synthetic adsorbent is most preferably used, and as examples there may be mentioned the synthetic adsorbent "DIAION^{R} HP" (product of Mitsubishi Chemical Corp.) composed of a styrene-divinylbenzene copolymer-based resin and the synthetic adsorbent "AMBERLITE^{R} XAD-7" (product of Rohm & Haas) composed of an acrylic acid ester-based resin.

The method for contacting with such adsorbents may employ a batch process or column system, but a column system is more advantageous on a commercial production scale, and the preferred treatment condition is a space velocity of SV = 1.

The extract obtained by purification with the adsorbent may be used as the agent for improving taste according to the invention either directly or after concentration, but from the viewpoint of better manageability, the solvent is preferably removed by concentration under reduced pressure or freeze-drying for use as a powder.

Further applying the purifying treatment described below will remove the contaminants that cannot be removed using the aforementioned adsorbent, such as coloring substances, caffeine, polyphenols, polysaccharides, proteins, mineral components such as calcium, potassium and sodium, and amino acids, thus yielding a taste-improving agent with an even greater effect.

Specifically, the extract obtained by extraction of tea leaves with water may be purified with an adsorbent to obtain a purified product, which is then subjected to treatment by one or more purification methods selected from among (a) treatment with a separating membrane, (b) insoluble matter treatment by addition of an organic solvent and (c) treatment with a cation-exchange resin, described below, to obtain a taste-improving agent with an even greater effect.

Any one, or a combination of two or more, of the purification methods (a)-(c) may be selected as necessary.

### (a) Treatment with separating membrane

This is a method of purification by removing the high molecular polysaccharides and proteins by membrane (filtration) treatment. The type of membrane used may be an ultrafiltration membrane, reverse osmosis membrane or dialysis membrane.

### (b) Insoluble matter treatment by addition of organic solvent

This is a method of purification by adding an organic solvent to the extract or its concentrate and removing the precipitating insoluble matter.

The added organic solvent may be methanol, ethanol, n-propanol, acetone or the like, with ethanol being preferred among these from the viewpoint of safety and manageability. There is no particular restriction on the amount of addition, but it is preferably 0.1-10 parts by weight with respect to the extract or its concentrate.

### (c) Treatment by cation-exchange resin

This is a method of purification by contacting the extract or its concentrate with a cation-exchange resin.

The type of cation-exchange resin used for the invention is not particularly restricted, and there may be mentioned as preferred examples "AMBERLITE^{R} IR120B" (product of Rohm & Haas) or "DIAION^{R} SK1B" (product of Mitsubishi Chemical Corp.), which are composed of styrene-based resins and have sulfonic acid groups as substituents.

The purified product obtained by the purification steps of (a) - (c) described above may be used directly as agents for improving taste, but from the viewpoint of better manageability, the solvent is preferably removed by concentration under reduced pressure or freeze-drying for use as a powder.

### (2) Coffee bean hydrolysate containing quinic acid

### a) Starting material

The coffee bean starting material used may be any desired bean without restriction to locality or variety. While raw coffee beans contain abundant amounts of quinic acid in the form of derivatives such as chlorogenic acid, roasted coffee beans contain quinic acid produced by hydrolysis of the chlorogenic acid compounds during roasting. When the starting material consists of roasted coffee beans, therefore, the roasted coffee beans may be extracted with water and/or a water-soluble solvent either directly of after grinding, and the obtained extract subjected to the same purification steps as for tea leaves, to obtain an agent for improving taste according to the invention. When raw coffee beans are used, the extract that contains chlorogenic acid and other derivatives, obtained by extraction of the raw beans, is hydrolyzed using an enzyme or alkali as described below.

### b) Enzyme hydrolysis

The raw coffee beans are extracted with water and/or a water-soluble solvent, either directly or after grinding. The water-soluble solvent used may be a solvent such as methanol, ethanol, 2-propanol or acetone, any one or a mixture of two or more of which may be used, and if necessary it may be used in the form of an aqueous solution. The extraction method may be carried out under common conditions with no particular restrictions, and the amount of extraction solvent used may be 1-30 fold and preferably 5-20 fold with respect to the coffee beans. The temperature and time for extraction may be set as desired and is not particularly restricted, with 1-24 hours and preferably 2-8 hours at 50-100°C being suitable. After removing the insoluble matter, the extract is concentrated if necessary and subjected to enzymolysis. When the extract is a water extract, it is preferably subjected to enzyme treatment directly, and when it contains a water-soluble solvent, the water-soluble solvent content is first reduced to no greater than 5% by concentration or the like.

Tannase or chlorogenic acid esterase is used for the enzymolysis. There are no particular restrictions on the type of tannase that may be used, and there may be mentioned tannases produced by microorganisms, such as filamentous fungi such as *Aspergillus,* yeast and bacteria, and especially by *Aspergillus* or *Penicillium,* although preferably tannases produced by *Aspergillus* and most preferably *Aspergillus oryzae* are used. There are also no particular restrictions on the type of chlorogenic acid esterase that may be used, and there may be mentioned those produced by filamentous fungi such as *Aspergillus, Penicillium* and *Botrytis,* although preferably chlorogenic acid esterases produced by *Aspergillus* and most preferably *Aspergillus japonicus* or *Aspergillus niger* are used. These enzymes are commercially available and can be obtained as products from Kikkoman Corp., for example. In addition, these enzymes can be used after immobilization by an immobilization method to obtain an even greater effect.

The conditions for enzymolysis are not particularly restricted, but are preferably 1-48 hours at 30-50°C and even more preferably 2-24 hours at 35-45°C.

The coffee bean extract is hydrolyzed with the enzyme, the insoluble matter is removed and the hydrolysate is contacted with an adsorbent for purification to obtain a quinic acid-containing coffee bean hydrolysate. Contact with an adsorbent removes contaminants such as unreacted chlorogenic acid, caffeic acid by-product or caffeine, for purification. There are no particular restrictions on the type of adsorbent used so long as it is a high molecular resin-based adsorbent, and as examples there may be mentioned cation-exchange resins such as AMBERLITE IR (Organo Corp.) and the styrene-divinylbenzene-based synthetic adsorbent DIAION HP (Mitsubishi Chemical Corp.), with DIAION HP-20 being particularly preferred for use. The method for contacting with these resins may employ a batch process or column system, but a column system is more common on a mass-production scale.

The obtained liquid composition may be used directly as the agent for improving taste according to the invention, but preferably the solvent is removed by concentration under reduced pressure or freeze-drying to obtain the taste-improving agent as a powder. The obtained taste-improving agent will contain monosaccharides, amino acids and the like in addition to quinic acid, with quinic acid and monosaccharide contents of approximately 30-50 wt% and 20-40 wt%, respectively. An excellent taste-improving effect may be exhibited by the synergistic effect of quinic acid and the other components.

### c) Alkali hydrolysis

For alkali hydrolysis, the coffee beans are finely ground and an aqueous alkali solution is added prior to heated stirring at 60-90°C for 10-60 minutes. The aqueous alkali solution used may be an aqueous solution containing calcium hydroxide, sodium hydroxide or sodium carbonate, and preferably calcium hydroxide is used. After hydrolysis, an acid such as hydrochloric acid, sulfuric acid, oxalic acid or phosphoric acid is added to the reaction mixture for neutralization treatment.

The neutralized hydrolyzed solution is passed through an ion-exchange membrane-equipped electrodialysis apparatus to remove the salt produced by neutralization. The desalting is preferably carried out using a membrane corresponding to an anion exchange membrane molecular cutoff of 100-300 and preferably 100, while there is no particular restriction on the cation exchange membrane.

The liquid composition obtained by the hydrolysis may be used directly as a taste-improving agent, but preferably the water is removed by concentration under reduced pressure or freeze-drying to obtain the taste-improving agent as a powder.

The quinic acid and monosaccharide contents in a taste-improving agent comprising quinic acid-containing tea leaf extract powder are approximately 5-35 wt% and 1-40 wt%, respectively, while the quinic acid and monosaccharide contents in a taste-improving agent comprising quinic acid-containing coffee bean hydrolysate powder are approximately 30-50 wt% and 20-40 wt%, respectively.

### [B] Spilanthol or a spilanthol-containing plant extract or plant essential oil.

### (1) Starting material

The spilanthol (N-isobutyl-2,6,8-decatrieneamide) used for the agent for improving taste according to the invention is the pungent component in *Spilanthes acmella* or *Spilanthes acmella* var. *oleracea.* Spilanthol can be obtained by extraction and purification from these plants, or it may be chemically synthesized. Spilanthol obtained by any such methods may be used for the invention, and it does not need to be a highly purified form. Spilanthol-containing plant extracts or essential oils may be used without purification so long as their tastes and odors do not adversely affect the flavor of the food or drink. From the viewpoint of safety it is preferred to use extracts or essential oils obtained from proven edible plants, while from the viewpoint of supply, cost and other practical factors, it is particularly preferred to use extracts or essential oil of *Spilanthes acmella* or *Spilanthes acmella* var. *oleracea,* which have high spilanthol contents.

### (2) Production process

The spilanthol may be obtained by extraction or distillation from the total herb or flower head of *Spilanthes acmella* or *Spilanthes acmella* var. *oleracea,* which have high spilanthol contents. Using extraction for the sake of illustration, the flower head of *Spilanthes acmella* or *Spilanthes acmella* var. *oleracea* is dried and crushed, and then subjected to extraction with an organic solvent to obtain a spilanthol-containing extract. The organic solvent used for extraction is not particularly restricted, and may be an alcohol such as methanol, ethanol, propanol or propylene glycol, a ketone such as acetone, an ester such as ethyl acetate, an ether such as diethyl ether or a hydrocarbon such as hexane or heptane, either alone or in admixture as appropriate. A polar organic solvent such as an alcohol is preferred, with ethanol being particularly preferred from the standpoint of safety. The solvent is distilled off from the obtained extract solution to obtain the spilanthol-containing extract.

The obtained spilanthol-containing extract may be used directly as an agent for improving taste according to the invention, but in cases where components other than the spilanthol in the extract may adversely affect the taste of the food or drink, it is preferred to increase the spilanthol content by a purification method such as distillation. The purification method may be molecular distillation, thin-film distillation or a chromatography method, and such purification methods may be used alone or in appropriate combinations to obtain a taste-improving agent with a higher spilanthol content.

### [C] Allium plant extract

### (1) Starting material

The *Allium* plant used for the invention is not particularly restricted so long as it is a plant belonging to the genus *Allium,* and examples thereof include garlic, onion, shallot, Welsh onion, Chinese chive, scallion, chive, leek and Alpine leek. Preferred are garlic (*Alliumsativum* L.), onion (*Allium capa* L.) and shallot (*Allium ascalonicum* L.), with shallot (*Allium ascalonicum* L.) and/or onion (*Allium capa* L.) being more preferred, and shallot (*Allium ascalonicum* L.) being most preferred. These *Allium* plants may be used alone or in combinations of two or more. The plants are either cut raw, or depending on the purpose they are dried and extracted by heat treatment, but preferably they are cut raw and cooled and extracted without delay.

### (2) Production process

There are no particular restrictions on the extraction temperature for the *Allium* plant according to the invention, but it is preferably as low a temperature as possible without freezing the extraction starting material, and a temperature of between -20°C and 0°C is suitable. The temperature is preferably -15°C to 0°C and most preferably -15°C to -5°C. An *Allium* plant will not freeze at about -20°C in the presence of a solvent, but if the extraction temperature is below -20°C causing the cells in the plant to undergo freeze rupture, the yield will be improved but undesirable components will also be extracted, thus tending to impair the flavor. If the extraction temperature is above 0°C, the enzyme reaction in the plant will be too active, tending to complicate flavor control.

The alcoholic solvent used for extraction of the *Allium* plant of the invention is not particularly restricted so long as it has one or more hydroxyl groups in the molecule and is a liquid at the extraction temperature, and examples include monovalent alcohols such as methanol, ethanol, propanol and isopropanol and polyhydric alcohols such as propylene glycol and glycerin, among which monovalent alcohols such as methanol, ethanol, propanol and isopropanol are preferred, and ethanol is most preferably selected. These alcohols may be used in the form of aqueous solutions, and preferably as 30-95% aqueous solutions, more preferably as 50-90% aqueous solutions and most preferably as 60-85% aqueous solutions. At less than 30%, the solvent may freeze during extraction when the extraction is carried out at low temperature, and at greater than 95% the extraction time will tend to be longer.

The extraction time for the *Allium* plant according to the invention may be selected as desired without any particular restrictions, but for extraction at low temperature it is preferably 8-96 hours, even more preferably 24-84 hours and most preferably 48-72 hours. At shorter than 8 hours the extraction efficiency may be reduced, while a time of longer than 96 hours for extraction is economically undesirable.

### (D) Use of agent for improving taste

The agent for improving taste according to the invention may be used for potassium salts or potassium salt-containing foods or drinks without any particular restrictions, and is especially suitable for improving the taste of potassium chloride which is widely used as a salt substitute. When the taste-improving agent is directly added to a potassium salt, the powdered taste-improving agent may be used as a mixed powder in admixture with the potassium salt, or the taste-improving agent may be dissolved in water together with the potassium salt as an aqueous solution, or an excipient such as dextrin may be further added to the aqueous solution and spray-drying carried out to obtain a powdered composition. The taste-improving agent may also be added to a mixture of the potassium salt with table salt, natural salt, "nigari" or the like.

When the taste-improving agent is used in a potassium salt-containing food or drink such as a reduced-sodium food containing potassium salt, an appropriate amount of the taste-improving agent may be added during production of the food or drink, or the taste-improving agent may be added to a food or drink already containing a potassium salt, or a mixed composition comprising the taste-improving agent and potassium salt may be added to the food or drink to obtain a potassium salt-containing food or drink.

The agent for improving taste according to the invention may be added to a food or drink containing potassium glutamate, potassium citrate or the like in addition to a potassium salt used as a salt substitute, such as potassium chloride, to reduce the unpleasant tastes such as metallic taste or acrid taste of the potassium compound, and improve the gustatory quality.

The amount of agent for improving taste according to the invention added to a potassium salt is not particularly restricted so long as it is appropriately set based on the degree of salt substitution by potassium chloride or the like, the addition concentration of the potassium salt, and the types of other food starting materials used. For quinic acid or a quinic acid-containing composition, the amount of addition is suitably 20-10,000 ppm and preferably 200-5000 ppm as the quinic acid content with respect to the potassium salt, for spilanthol or a spilanthol-containing plant extract or plant essential oil the amount of addition is suitably 1-5000 ppm and preferably 10-2000 ppm as the spilanthol content with respect to the potassium salt, and the *Allium* plant extract content is suitably 2-40,000 ppm and preferably 200-10, 000 ppm as the solid content of the extract with respect to the potassium salt.

When an agent for improving taste according to the invention is directly added to a food or drink, the necessary amount of the agent for improving taste is added with respect to the potassium salt content in the food or drink, but generally for quinic acid or a quinic acid-containing composition it is suitably added for a quinic acid content of 0.1 ppm-10 ppm and preferably 1 ppm-5 ppm in the food or drink, for spilanthol or a spilanthol-containing plant extract or plant essential oil it is suitably added for a spilanthol content of 5 ppb-1000 ppb and preferably 50 ppb-500 ppb in the food or drink, and for an *Allium* plant extract it is suitably added for a solid extract content of 0.01 ppm-200 ppm and preferably 1 ppm-50 ppm in the food or drink. There are no particular restrictions on the proportion of the quinic acid-containing composition, spilanthol and *Allium* plant extract, and they may be used with admixture in any desired proportion.

Since the flavor of the taste-improving agent itself will be noticeable with a large amount of addition of the taste-improving agent it is generally used in an amount below such a level, but this level may be exceeded if the flavor of the taste-improving agent itself is not a problem.

The quinic acid or quinic acid-containing composition, spilanthol or spilanthol-containing plant extract or plant essential oil and *Allium* plant extract according to the invention may be used as taste-improving agents alone, but two or more of such taste-improving agents may also be used together, in which case the taste-improving effects of each will combine to exhibit a greater effect than with either alone. The mixing proportion for combined use of two or more agents is generally preferred to be quinic acid/spilanthol = 1/1-100/1, *Allium* extract/spilanthol = 1/1-1000/1, quinic acid/*Allium* extract = 1/1-1/10.

The agent for improving taste according to the invention may be used in a potassium salt-containing food or drink in the form of a flavoring for a food or drink flavoring, in desired combinations with other flavoring components. There are no particular restrictions on combinations of flavoring components, and as examples there may be mentioned synthetic and naturally derived flavorings such as ethyl acetoacetate, acetophenone, anisaldehyde, α-amylcinnamaldehyde, methyl anthranilate, ionone, isoeugenol, isoamyl isovalerate, ethyl isovalerate, allyl isothiocyanate, 3-butenyl isothiocyanate, 4-pentenyl isothiocyanate, benzyl isothiocyanate, 3-methylthiopropyl isothiocyanate, isothiocyanate, indoles and their derivatives, γ-undecalactone, esters, ethylvanillin, ethers, eugenol, octanol, octanal, ethyl octanoate, isoamyl formate, geranyl formate, citronellyl formate, cinnamic acid, ethyl cinnamate, methyl cinnamate, ketones, geraniol, isoamyl acetate, ethyl acetate, geranyl acetate, cyclohexyl acetate, citronellyl acetate, cinnamyl acetate, terpinyl acetate, phenethyl acetate, butyl acetate, benzyl acetate, 1-menthyl acetate, linalyl acetate, methyl salicylate, cyclohexylallyl propionate, citral, citronellal, citronellol, 1,8-cineol, fatty acids, aliphatic higher alcohols, aliphatic higher aldehydes, aliphatic higher hydrocarbons, cinnamyl alcohol, cinnamaldehyde, thioethers, thiols, decanal, decanol, ethyl decanoate, terpineol, limonene, pinene, myrcene, terpinolene, terpene-based hydrocarbons, γ-nonalactone, vanillin, paramethylacetophenone, hydroxycitronellal, hydroxycitronellaldimethylacetal, piperonal, isoamyl phenylacetate, isobutyl phenylacetate, ethyl phenylacetate, phenol ethers, phenols, furfural and its derivatives, propionic acid, isoamyl propionate, ethyl propionate, benzyl propionate, hexanoic acid, allyl hexanoate, ethyl hexanoate, ethyl heptanoate, 1-perillaldehyde, benzyl alcohol, benzaldehyde, aromatic alcohols, aromatic aldehydes, d-borneol, maltol, methyl N-methylanthranilate, methyl-ß-naphthylketone, dl-menthol, 1-menthol, butyric acid, isoamyl butyrate, ethyl butyrate, cyclohexyl butyrate, butyl butyrate, lactones, linalool and the like, as well as natural flavorings obtained from citrus-based essential oils such as orange, lemon, lime and grapefruit, fruit-based essential oils and recovered flavors such as apple, banana, grape, melon, peach, pineapple and strawberry, dairy-based extract flavors such as milk, cream, butter, cheese and yogurt, recovered flavors of flavorings such as green tea, black tea, coffee and cocoa, mint-based essential oils such as peppermint or spearmint, spice extracts obtained from hemp seed, asafoetida, ajowan, anise, angelica, fennel, turmeric, oregano, allspice, orange peel, szechuan pepper, cassia, camomile, brassica juncea, cardamom, curry tree or curry-leaf tree, liquorice, caraway, gardenia, cumin, water cress, clove, poppy seed, caper, pepper, sesame, coriander, sassafras, saffron, savory, salvia, Japanese pepper, perilla, cinnamon, juniperberry, ginger, star anise, spearmint, horseradish, celery, sorrel, thyme, tamarind, tarragon, chive, dill, capsicum, nutmeg, wormwood, nigella, ginseng, basil, parsley, mint, vanilla, bell pepper, hyssop, Fenugreek, peppermint, horsemint, horseradish, marjoram, myoga, lavender, linden, lemongrass, lemon balm, rose, rosemary, bay, horseradish and the like, Iceland moss, rehmannia, akebia, cannabis, asafoetida, maidenhair fern, ajowan, azuki bean, rooibos, applemint, artichoke, anise, avocado, hydrangea, jiaogulan, fritillary, amyris, almond, epazote, alkanet, artemisia, arnica, alfalfa, aloe, angostura, angola weed, apricot, chanterelle, angelica, amber, ambergris, ambrette, squid, barrenwort, rush, yeast, Japanese knotweed, strawberry, fig, ginkgo, oxknee, ylangylang, hedysarum, imperatoria, immortelle, wintergreen, watercress, ivy, turmeric, usubasaishin, woodruff, sea urchin, ume, oolong tea, perilla, enokitake, shrimp, ebisugusa, erigeron, elder, eleutherococcus, elecampane, elemi, engosaku, pagoda tree, endive, blessed thistle, huang lian, plantain, cnidium fruit, krill, oak, oakmoss, mole cricket, osmanthus, opoponax, ominaeshi, water plantain, origanum, orris, olibanum, olive, allspice, orange, orangeflower, seaweed, kaininso, cacao, persimmon, fruit vegetables, cashew nut, cascara, cascarilla, castoreum, katakuri, dried skipjack, cassie, purging cassia, catechu, crab, carnation, valerian, chamomile, cajeput, mustard, karasuuri, crowdipper, guarana, calamus, galanga, currant, carissa, Chinese quince, cardamom, galbanum, curry, kawamidori, liquorice, gambir, Chinese olive, kiwifruit, kikaigaratake, baloonflower, chrysanthemum, Jew's ear, kisasage, gishigishi, kidachi aloe, peruvian bark, kihada, kibanaougi, giboshi, gymnema sylvestre, catnip, caraway, carob, cucumber, quillaia, agrimony, guava, guaiacum, gou qi zi, kusasugikazura, Japanese quince, kudzu, camphor, kamala, gooseberry, gardenia, cubeb, bearberry, oleaster, cumin, ground ivy, kurara, clary sage, cranberry, chestnut, walnut, cream, grains of paradise, dittany of Crete, grapefruit, clover, clove, kuromoji, mulberry, quassia, caper, getto, cade, quebracho, germander, kencur, Japanese raisin, geranium herb, koji, koutake, black tea, kohone, coca, scullcap, brown sugar, cereals, coconut, wu zhu yu, pepper, costus, costmary, copaiba, coffee, kobushi, burdock, sesame, cola, coriander, coltsfoot, golden rod, colombo, root vegetable, condurango, comfrey, cypress, fish, cherry flower, cherry , pomegranate, sake cake, bamboo grass, sasakusa, sea buckthorn, sassafras, saffron, sapodilla, cactus, sarashinashoma, sarsaparilla, salsify, polypore, hawthorn, cornus fruit, Japanese pepper, Santa herb, sandarac, sandalwood, red sandalwood, shiitake, genet, perilla, cedar, citrus, citronella, schinus, civet, simarouba, shimeji, Chinese peony, jasmin, Mondo grass, jaborandi, shukusha, juniperberry, ginger, soy, soy sauce cake, spirits, shoro, elm mushroom, ginseng, cinnamon, vinegar, watermelon, narcissus, cedar, star anise, star fruit, styrax, terrapin, suppontake, zdravetz, snakeroot, spikenard, spruce, spearmint, pigweed, sloe berry, savory, grassy-leaved sweet flag, sage, zedoary, senega, geranium, celery, senkyu, centaury, sendan, St John's wort, senna, sauces, rhubarb, soybean, thyme, bamboo shoot, octopus, water-pepper, davana, egg, royal agaric, tamarind, damiana, tamogitake, tarragon, angelica tree, tansy, tangerine, dandelion, cherimoya, cherry laurel, wild cherry, Cogon Grass, chicory, cheese, chichitake, chive, chervil, champaca, tuberose, wu wei zi, chirata, fern-ally, pickled products, ivy, camellia, tsuyukusa, tsuriganeninjin, tsurudokudami, deertongue, thistle, dittany, dill, date, lindera root, tenma, capsicum, toki, proteins, oils and fats, molasses, cornsilk, dokudami, eucommia, dog grass, tomato, dragon's blood, dorian, truffle, tolu balsum, tonka, naginatakoju, pear, nasturtium, nut, fermented soybean, Chinese dates, nutmeg, pink, nameko, naratake, ti-tree, cultured lactic acid bacteria solution, ginseng, nezumimochi, nettle, silk tree, knotgrass, violet, pineapple, hibiscus, malt, chickweed, basil, lotus, honeysuckle, paskappu, parsley, butter, butter oil, buttermilk, birch, honey, patchouli, mint, bagbean, fermented alcoholic beverages, fermented milk, fermented seasoning, passion fruit, hatsutake, buffaloberry, Job's tears, hanasuge, banana, vanilla, honeysuckle, papaya, burberry, hamago, hamasuge, rugosa rose, hamabofu, winter bloom, rose, palmarosa, sugar apple, hikiokoshi, water chestnut, pistachio, hyssop, hickory, peanut, cypress, hiba, popsissewa, himehagi, hyacinth, mushroom, loquat, areca nut, feijoa, Fenugreek, fennel, fujibakama, fujimodoki, bran, fusel oil, petitgrain, buchu, grape, wine lees, rose apple, beech, bunaharitake, black caraway, blackberry, plum, bryonia, prickly ash, primrose, prunella, blueberry, breadfruit, hay, bay, hazelnut, vetiver, betel, safflower, pennyroyal, peppermint, snake, pepino, peptone, bergamot, bergamot mint, Peru balsam, verbena, veronica, benzoin, rosewood, horehound, haw, houkitake, houshou, fang feng, whey, honoki, horsemint, horseradish, peony, hop, poppy, poplar, papaw, jojoba, sea squirt, bordeaux, boronia, maitake, mugwort, marshmallow, marjoram, mastic, massoi, catnip, matico, pine, matsuoji, mushroom, matsutake, matsubusa, poria, mate tea, bean, marigold, garden rhubarb, quince, mullein, mallow, mango, mangosteen, tangerine, chai hu, miso, mitsumata, beeswax, meat, mimoza, myoga, milk, myrtle, milfoil, myrrh, myrobalan, roasted barley, musk, gromwell, mesquite, meadowsweet, motherwort, maple, melissa, melilot, melon, sundew, cultured Moniliaceae solution, fir, peach, Jew's mallow, yakuchi, bayberry, eucalyptus, yukinoshita, yuzu, yucca, lily, leaf vegetables, yoroigusa, lionsfoot, litchi, life everlasting flower, lime, lilac, rakanka, long-leaved podocarp, raspberry, rhatany, radish, labdanum, lavender, lungwort, lungmoss, ramboutan, liqueur, leek, litsea, linaloe, longan, ryofunso, green tea, apple, linden, gentian, roux, borage, reseda, lemon, lemongrass, lian qiao, lotus, wax jambu, rosemary, lovage, bay, longose, horseradish, watafujiutsugi, wormwood, wormseed, bracken, burnet and the like, any of which may be appropriately selected for use.

The food or drink to which an agent for improving taste according to the invention is added is not particularly restricted so long as it is a potassium-containing food or drink, and the agent may be added to any such foods or drinks whose taste is desired to be improved. As examples there may be mentioned (1) confectioneries and the like, (2) breads, noodles, boiled rice and the like, (3) pickled foods and the like, (4) seafood-containing processed foods or drinks and the like, (5) livestock meat-containing processed foods or drinks and the like, (6) seasonings and the like, and (7) other foods. Examples of foods or drinks for the invention are listed below.

### (1) Confectioneries

As examples of confectioneries there may be mentioned rice crackers, arare crackers, okoshi rice crackers, rice cakes, stuffed buns, uiro bean pastes, bean pastes, sweet bean pastes, watery sweet bean pastes, nishikidama, jelly, castella, candies, biscuits, crackers, potato chips, cookies, pies, puddings, butter cream, custard cream, cream puffs, waffles, sponge cake, donuts, chocolate, chewing gum, caramel, candy, pastes such as peanut paste, and the like.

### (2) Breads, noodles, boiled rice

As breads, noodles or boiled rice there may be mentioned bread, Japanese noodles, ramen, Chinese noodles, sushi, fish/vegetable-containing boiled rice, fried rice, pilaf, gyoza skin, shumai skin, okonomiyaki, takoyaki, and the like.

### (3) Pickled foods

As examples of pickled foods there may be mentioned nukazuke, umeboshi, fukujinzuke, bettarazuke, senmaizuke, rakkyo, misozuke, takuanzuke, and the materials for such pickles.

### (4) Seafood-containing processed foods or drinks

As examples of seafoods there may be mentioned fish such as mackerel, sardine, pike, salmon, tuna, bonito, whale, flounder, sand lance and trout, squids such as flying squid, spear squid, cuttlefish and firefly squid, octopuses such as common octopus and ocellated octopus, shrimp such as prawn, spot prawn, lobster and black tiger prawn, crabs such as red king crab, snow crab, swimming crab and horsehair crab, and shellfish such as Japanese littleneck, clam, scallop, oyster and moule. As examples of processed foods or drinks containing such seafoods there may be mentioned canned foods, boiled fish, tsukudani, minced fish, marine paste products (fish paste, kamaboko, fried kamaboko, crab leg kamaboko, etc.), fried fish, tempura and the like.

### (5) Livestock meat-containing processed foods or drinks

As examples of livestock meats there may be mentioned chicken, pork, beef, lamb, horse meat and the like. As examples of processed foods or drinks containing such meats there may be mentioned curry, stew, beef stew, hayashi rice broth, meat sauce, mabo tofu, hamburger, gyoza, kettle rice seasoning, soups, meatballs, meat cubes, canned meats and the like.

### (6) Seasonings

As examples of seasonings there may be mentioned table salt, and powder mixtures such as seasoning salt, soy, powdered soy, miso, powdered miso, moromi, hishio, furikake, ochaduke powder, margarine, mayonnaise, dressing, vinegar, sanbaizu, powdered sushi vinegar, powdered Chinese seasoning, tempura soup, noodle soup, sauces, ketchup, yakiniku sauce, curry roux, instant stew, powdered soup, powdered seasoning, compound seasonings, shin-mirin, karaage powder, takoyaki powder and the like.

### (7) Other components

Other components that may be used include dairy products such as cheese and butter, cooked foods such as vegetables, chikuzenni, oden and steamboat dishes, box lunch fish and vegetables and side dishes, as well as tomato juice, sports drinks and the like.

The agent for improving taste according to the invention is suitable for foods and drinks for which it is desired to increase the substitution of potassium chloride for salt to reduce the sodium content, where such substitution is restricted due to the flavor, such as acrid taste, of potassium chloride, and among such foods and drinks it is preferably used especially in kamaboko, ham, bread, salted and dried foods, pickles, umeboshi, soy sauce, seasoning, fish sauce, miso, sauce, soup, butter, margarine, mayonnaise, dressing, flavoring products, snack candies and the like.

Using the agent for improving taste according to the invention can reduce the unpleasant tastes such as metallic taste or acrid taste of not only potassium chloride but also potassium-containing foods and drinks, such as foods and drinks containing potassium glutamate, potassium citrate and the like, and thus improve their overall taste.

### Examples

The present invention will now be explained in greater detail by the following examples, with the understanding that the invention is in no way intended to be restricted to the examples.

### [Production Example 1] <Quinic acid-containing composition derived from raw coffee beans>

After finely grinding 500 g of raw coffee beans, 5000 ml of a 70 wt% ethanol aqueous solution was added and the mixture was heated to reflux for 2 hours. After cooling the solution, it was subjected to solid-liquid separation with a centrifugal filter, the filtrate was concentrated under reduced pressure to an ethanol content of below 5 wt%, and 1000 units of chlorogenic acid esterase (product of Kikkoman Corp.) was added prior to stirring at 40°C for 3 hours. After removing the insoluble portion by centrifugal separation, the treated solution was passed through a column packed with 1000 ml of a synthetic adsorbent (DIAION HP-20, mentioned above), the eluting solution was lyophilized to obtain 26.6 g of a raw coffee bean-derived quinic acid-containing composition (hereinafter referred to as "quinic acid-containing composition (1)").

One unit of chlorogenic acid esterase is the amount of enzyme that hydrolyzes 1 micromole of 5-caffeoylquinic acid in 1 minute in water at 30°C. The quinic acid content of this composition was 32%.

### [Production Example 2] <Quinic acid-containing composition derived from black tea leaves>

After adding 1000 g of distilled water to 100 g of black tea leaves, the mixture was extracted for 30 minutes at ordinary temperature (15-30°C). The extract was subjected to solid-liquid separation with a centrifugal filter to obtain 900 g of filtrate. After then adding 30 g of active carbon to the filtrate, the mixture was stirred for 1 hour for purifying treatment. The active carbon was then removed, and the mixture was concentrated to obtain 140 g of concentrate. The concentrate was supplied to a column packed with 100 ml of a cation-exchange resin (DIAION SK1B, mentioned above), and purifying treatment was carried out with liquid conveyance at a space velocity of SV = 2 (first re-purification) . The liquid which passed through the column was concentrated to approximately 40 g, and then 52.5 g of 95% ethanol and 2 g of active carbon were added, the mixture was stirred and cooled, and then the insoluble portion was filtered (second re-purification). A 78 g portion of the obtained filtrate was lyophilized to obtain 4.7 g of a black tea leaf extract (hereinafter referred to as "quinic acid-containing composition (2) "). The quinic acid content of this composition was 16%.

### [Production Example 3] <Crude spilanthol>

To 10 kg of dried flower heads of *Spilanthes acmella* (crushed to about 5 mm) there was added 100 kg of 99 vol% ethanol, and extraction was carried out at 75°C-reflux temperature for 5 hours. After cooling the extract solution to 40°C, the solid and liquid portions were separated with a centrifugal separator and the extract was concentrated to 20 kg under reduced pressure. After adding 0.2 kg of active carbon to the concentrate and stirring for 1 hour, diatomaceous earth was added, pressure filtration was performed to remove the active carbon, and the extract was further concentrated under reduced pressure to obtain 0.43 kg of a *Spilanthes acmella* concentrate. Next, 2 kg of distilled water was added to the concentrate and extraction was performed three times with 2 kg of ethyl acetate. The extracted ethyl acetate layers were pooled, diatomaceous earth was added, pressure filtration was performed, and the mixture was concentrated under reduced pressure to obtain 0.31 kg of a *Spilanthes acmella* crude extract. Yield: 3.1%. Spilanthol content: 12.4%. After combining 100 g of the *Spilanthes acmella* crude extract to 100 g of fatty acid triglycerides, a reduced pressure thin-film distillation apparatus was used for distillation at a degree of vacuum of 3-5 Pa and a vaporization surface temperature of 110-150°C, to obtain 33.3 g of distillate. Yield: 33%. Spilanthol content: 38.0 wt%.

### [Production Example 4] <Purified spilanthol>

A 300 g portion of dried flower heads of *Spilanthes acmella* was subjected to reflux extraction for 1 hour with 3200 g of 95 vol% ethanol. The extract solution was cooled, the solid and liquid portions were separated, and diatomaceous earth was added for filtration. The filtrate was concentrated under reduced pressure to remove the ethanol, and then 300 g of water was added and extraction was performed three times with 300 ml of hexane. The extracted hexane layers were combined and concentrated under reduced pressure for removal of the hexane to obtain 8.4 g of a crude extract. Yield: 2.8% (spilanthol content: 9.5%). An 8.4 g portion of the crude extract was fractionated by silica gel column chromatography (silica gel: 200 g, Φ5 cm) (elution with n-hexane:ethyl acetate = 8:2), and then the spilanthol fraction (Rf value = 0.2-0.3, n-hexane:ethyl acetate = 7:3) was separated off and the solvent was distilled off under reduced pressure to obtain 2.76 g of a crude spilanthol fraction 1. The crude spilanthol fraction 1 was then subjected to simple distillation and purification (180°C) using a Kugel-Rohr distilling apparatus under reduced pressure (0.1 mmHg) to obtain 0.98 g of a crude spilanthol fraction 2. Yield: 0.33% (spilanthol content: 41.9%). A 0.98 g portion of the crude spilanthol fraction 2 was further fractionated by silica gel column chromatography (silica gel: 200 g, Φ5 cm) (elution with n-hexane:ethyl acetate = 95:5-90:10), and then the spilanthol fraction (Rf value = 0.2, n-hexane:ethyl acetate = 7:3) was separated off and the solvent was distilled off under reduced pressure to obtain 0.52 g of purified spilanthol. Yield: 0.17%. Spilanthol content: 98 wt%. The spilanthol structure was confirmed by proton and ¹³C NMR measurement in comparison with the known and published data.

### [Production Example 5] <Shallot extract>

Following the method described in Japanese Unexamined Patent Publication No. 2002-186448, shallot was extracted using a 76% (v/v) ethanol aqueous solution at -12°C, and the solvent was removed from the extract to obtain a shallot extract (solid content: 24%).

The taste-improving agents obtained in Production Examples 1-5 were used to examine the taste-improving effects on potassium salts or potassium salt-containing foods or drinks. The rating scale used for the organoleptic evaluation in the following test examples is shown in Table 1.

**[Table 1]**

| | |
|---|---|
| (Evaluation scale) | |
| +++ | Very noticeable effect (at least 8/10 panelists noticed an effect compared to the control) |
| ++ | Noticeable effect (at least 5/10 panelists noticed an effect compared to the control) |
| + | Somewhat noticeable effect (at least 3/10 panelists noticed an effect compared to the control) |
| - | No effect/change (fewer than 3/10 panelists noticed an effect compared to the control) |

### [Test Example 1] Potassium chloride composition (1)

After adding 40 kg of potassium chloride to 400 kg of water and completely dissolving it, the quinic acid-containing composition of Production Example 1 was added to a quinic acid content of 4% in the final powder, to prepare a quinic acid-containing composition-containing potassium chloride aqueous solution. The aqueous solution was spray-dried with an inlet temperature of 120°C and an outlet temperature of 80°C to obtain 38 kg of potassium chloride powder containing 4% quinic acid (Invention Product 1). The powder was dissolved in water to a potassium chloride concentration of 1% and the taste was evaluated by a panel of 10 experts, with a 1% potassium chloride aqueous solution containing no agent for improving taste according to the invention, as the control. As a result, the majority of the panel reported that the Invention Product 1 had reduced metallic taste and acrid taste characteristic of potassium chloride compared to the control, thus noting the taste-improving effect of the invention.

### [Test Example 2] Potassium chloride composition (2)

After adding 10 g of the crude spilanthol of Production Example 3, 20 g of processed starch and 70 g of dextrin in 150 g of water for emulsification, the emulsion was spray-dried to obtain spilanthol powder. A 0. 5 g portion of powder was added to 100 g of potassium chloride and uniformly mixed therewith to obtain a potassium chloride mixed powder (Invention Product 2). The powder was dissolved in water to a potassium chloride concentration of 1% and the taste was evaluated by a panel of 10 experts, with a 1% potassium chloride aqueous solution containing no agent for improving taste according to the invention, as the control. As a result, the majority of the panel reported that the Invention Product 2 had reduced metallic taste and acrid taste characteristic of potassium chloride compared to the control, thus noting the taste-improving effect of the invention. None of the panelists noticed any off-taste or off-odor in the invention products.

### [Test Example 3] Salt composition (1)

After adding 20 kg of potassium chloride and 20 kg of natural salt to 400 kg of water and completely dissolving them, the quinic acid-containing composition of Production Example 2 was added to a quinic acid content of 4% in the final powder, to prepare a mixed aqueous solution of potassium chloride and salt comprising a quinic acid-containing composition. The aqueous solution was spray-dried with an inlet temperature of 120°C and an outlet temperature of 80°C to obtain 38 kg of a mixed powder comprising potassium chloride and salt (Invention Product 3). The powder was dissolved in water to a total potassium chloride and salt concentration of 1% and the taste was evaluated by a panel of 10 experts, with a 1% aqueous solution of potassium chloride and salt containing no agent for improving taste according to the invention, as the control. As a result, the majority of the panel reported that the Invention Product 3 had reduced metallic taste and acrid taste characteristic of potassium chloride compared to the control, thus noting the taste-improving effect of the invention.

### [Test Example 4] Salt composition (2)

After adding 20 kg of potassium chloride and 20 kg of natural salt to 400 kg of water and completely dissolving them, the quinic acid-containing composition of Production Example 2 was added to a quinic acid content of 4% in the final powder, the purified spilanthol of Production Example 4 was added to a spilanthol content of 2% in the final powder, and the shallot extract of Production Example 5 was added to a solid extract content of 4% in the final powder, to prepare mixed aqueous solutions of potassium chloride and salt comprising a quinic acid-containing composition, purified spilanthol and shallot extract. The aqueous solution was spray-dried with an inlet temperature of 120°C and an outlet temperature of 80°C to obtain 38 kg of a mixed powder comprising potassium chloride and salt (Invention Product 4). The powder was dissolved in water to a total potassium chloride and salt concentration of 1% and the taste was evaluated by a panel of 10 experts, with a 1% aqueous solution of potassium chloride and salt containing no agent for improving taste according to the invention, as the control. As a result, the majority of the panel reported that the Invention Product 4 had reduced metallic taste and acrid taste characteristic of potassium chloride compared to the control, thus noting the taste-improving effect of the invention.

### [Test Example 5] Potassium chloride aqueous solution

To a 0.75 wt% potassium chloride aqueous solution there were added each of the agents for improving taste of Production Examples 1-5, so that the content of the quinic acid-containing compositions (Production Examples 1 and 2), spilanthol (Production Examples 3 and 4) or shallot extract (Production Example 5) in the potassium chloride aqueous solution was as listed in Table 2, and an organoleptic evaluation was conducted by a panel of 10 experts based on the rating scale shown in Table 1, with a product containing no agent for improving taste according to the invention, as the control. The results are shown in Table 2.

**[Table 2]**

| Evaluation sample | Addition (ppm) | Metallic taste |
|---|---|---|
| Quinic acid-containing composition (Prod. Ex. 1) | 5.0 | ++ |
| Crude spilanthol (Prod. Ex. 3) | 0.1 | + |
| Purified spilanthol (Prod. Ex. 4) | 0.1 | ++ |
| Shallot extract (Prod. Ex. 5) | 10.0 | + |
| Quinic acid-containing composition | 5.0 | |
| (Prod. Ex. 1) | | +++ |
| + Purified spilanthol (Prod. Ex. 4) | 0.1 | |

As shown in Table 2, addition of each of the taste-improving agents to the potassium chloride aqueous solution produced a taste-improving effect. The improving effect was further enhanced by combining the agents for improving taste.

### [Test Example 6] Japanese noodle soup

To reduced-sodium Japanese noodle soup having the following formulation 1 there were added each of the agents for improving taste of Production Examples 2, 4 and 5 so that the contents of the quinic acid-containing composition (Production Example 2), purified spilanthol (Production Example 4) and shallot extract (Production Example 5) in the Japanese noodle soup were as listed in Table 3, and an organoleptic evaluation was conducted by a panel of 10 experts based on the rating scale shown in Table 1, with a product containing no agent for improving taste according to the invention, as the control. The results are shown in Table 3.

### (Formulation 1)

| Ingredients | Content (g) |
|---|---|
| Water | 914.0 |
| Salt | 1.0 |
| Potassium chloride | 1.0 |
| Sugar | 2.0 |
| Mirin | 20.0 |
| Weak soy sauce | 60.0 |
| Dried bonito flavor (Ogawa & Co., Ltd.) | 1.0 |
| MSG | 1.0 |
| Total | 1000.0 |

**[Table 3]**

| Evaluation sample | Addition (ppm) | Dried bonito flavor | Salty taste | Metallic taste |
|---|---|---|---|---|
| Quinic acid-containing composition (Prod. Ex. 2) | 5.0 | | | |
| + Purified spilanthol (Prod. Ex. 4) | 0.1 | - | + | ++ |
| Quinic acid-containing composition (Prod. Ex. 2) | 5.0 | | | |
| + Purified spilanthol (Prod. Ex. 4) | 0.1 | - | ++ | +++ |
| + Shallot extract (Prod. Ex. 5) | 10.0 | | | |

As clearly shown in Table 3, addition of the quinic acid-containing composition and purified spilanthol as agents for improving taste according to the invention to reduced-sodium Japanese noodle soup produced taste-improving effects against the metallic taste characteristic of potassium chloride, while a salty taste enhancing effect was also noticed. This effect was even greater when shallot extract was also used in combination. On the other hand, no adverse effect was produced on the dried bonito flavor, as the original flavor of the Japanese noodle soup. None of the panelists noticed any off-taste or off-odor attributable to the invention products.

### [Test Example 7] Lightly pickle seasoning (diluted)

To a commercially available reduced-sodium lightly pickle seasoning (diluted) there were added each of the agents for improving taste of Production Examples 2, 4 and 5 so that the contents of the quinic acid-containing composition (Production Example 2), purified spilanthol (Production Example 4) and shallot extract (Production Example 5) in the weak pickle seasoning were as listed in Table 4, and an organoleptic evaluation was conducted by a panel of 10 experts based on the rating scale shown in Table 1, with a product containing no agent for improving taste according to the invention, as the control. The results are shown in Table 4.

**[Table 4]**

| Evaluation sample | Addition (ppm) | Taste | Salty taste | Umami | Unpleasant taste |
|---|---|---|---|---|---|
| Quinic acid-containing composition (Prod. Ex. 2) | 5.0 | | | | |
| + Purified spilanthol (Prod. Ex. 4) | 0.1 | - | + | - | ++ |
| Quinic acid-containing | 5.0 | | | | |
| composition (Prod. Ex. 2) | | + | ++ | + | +++ |
| + Purified spilanthol (Prod. Ex. 4) | 0.1 | | | | |
| | + Shallot extract (Prod. Ex. 5) | | | 10.0 | |

As clearly shown in Table 4, addition of the quinic acid-containing composition and purified spilanthol as agents for improving taste according to the invention to reduced-sodium lightly pickle seasoning produced taste-improving effects against the unpleasant taste characteristic of potassium chloride, and particularly an enhancing effect on salt taste and umami, as the original flavors of the lightly pickle seasoning, was noticed in combination with the shallot extract.

### [Test Example 8] Green perilla dressing

To reduced-sodium green perilla dressing having the following formulation 2 there were added each of the agents for improving taste of Production Examples 2, 4 and 5 so that the contents of the quinic acid-containing composition (Production Example 2), purified spilanthol (Production Example 4) and shallot extract (Production Example 5) in the dressing were as listed in Table 5, and an organoleptic evaluation was conducted by a panel of 10 experts based on the rating scale shown in Table 1, with a product containing no agent for improving taste according to the invention, as the control. The results are shown in Table 5.

### (Formulation 2)

| Ingredients | Content (g) |
|---|---|
| Vinegar | 200.0 |
| High-fructose corn syrup | 150.0 |
| Soy sauce | 60.0 |
| Potassium chloride | 8.0 |
| Sake | 20.0 |
| Perilla flavoring (Ogawa & Co., Ltd.) | 1.0 |
| Water | - |
| Total | 1000.0 |

**[Table 5]**

| Evaluation sample | Addition (ppm) | Perilla flavor | Salty taste | Acidic taste | Unpleasant taste |
|---|---|---|---|---|---|
| Quinic acid-containing composition (Prod. Ex. 2) | 5.0 | - | - | - | ++ |
| Quinic acid-containing composition (Prod. Ex. 2) | 5.0 | | | | |
| + Purified spilanthol (Prod. Ex. 4) | 0.1 | - | + | + | ++ |
| Quinic acid-containing composition (Prod. Ex. 2) | 5.0 | | | | |
| + Purified spilanthol (Prod. Ex. 4) | 0.1 | - | + | - | +++ |
| + Shallot extract (Prod. Ex. 5) | 10.0 | | | | |

As clearly shown in Table 5, addition of the quinic acid-containing composition, purified spilanthol and shallot extract as agents for improving taste according to the invention to reduced-sodium green perilla dressing produced taste-improving effects against the unpleasant taste characteristic of potassium chloride. On the other hand, no adverse effect was produced on the perilla flavor, as the original flavor of the reduced-sodium green perilla dressing. None of the panelists noticed any off-taste or off-flavor in the invention products.

### [Test Example 9] Italian dressing

To commercially available reduced-sodium Italian dressing there were added each of the agents for improving taste of Production Examples 1, 2, 4 and 5 so that the contents of the quinic acid-containing composition (Production Examples 1 and 2), purified spilanthol (Production Example 4) and shallot extract (Production Example 5) in the dressing were as listed in Table 6, and an organoleptic evaluation was conducted by a panel of 10 experts based on the rating scale shown in Table 1, with a product containing no agent for improving taste according to the invention, as the control. The results are shown in Table 6.

**[Table 6]**

| Evaluation sample | Addition (ppm) | Salty taste | Acidic taste | Acrid taste |
|---|---|---|---|---|
| Quinic acid-containing composition (Prod. Ex. 1) | 5.0 | - | - | ++ |
| Quinic acid-containing composition | 5.0 | | | |
| (Prod. Ex. 2) | | + | - | ++ |
| + Purified spilanthol (Prod. Ex. 4) | 0.1 | | | |
| Quinic acid-containing composition (Prod. Ex. 2) | 5.0 | | | |
| + Purified spilanthol (Prod. Ex. 4) | 0.1 | + | - | +++ |
| + Shallot extract (Prod. Ex. 5) | 10.0 | | | |

As clearly shown in Table 6, addition of the quinic acid-containing composition, purified spilanthol and shallot extract as agents for improving taste according to the invention to reduced-sodium Italian dressing produced taste-improving effects against the acrid taste characteristic of potassium chloride. On the other hand, no adverse effect was noticed against the acidic taste characteristic of reduced-sodium Italian dressing.

### [Test Example 10] Consomme soup

To reduced-sodium consomme soup having the following formulation 3 there were added each of the agents for improving taste of Production Examples 2, 4 and 5 so that the contents of the quinic acid-containing composition (Production Example 2), purified spilanthol (Production Example 4) and shallot extract (Production Example 5) in the soup were as listed in Table 7, and an organoleptic evaluation was conducted by a panel of 10 experts based on the rating scale shown in Table 1, with a product containing no agent for improving taste according to the invention, as the control. The results are shown in Table 7.

### (Formulation 3)

| Ingredients | Content (g) |
|---|---|
| Maltose | 1.000 |
| Consomme oil | 0.250 |
| Salt | 3.500 |
| Potassium chloride | 3.500 |
| MSG | 0.250 |
| Powdered sugar | 1.250 |
| Lactose | 0.300 |
| Celery powder | 0.125 |
| Pepper powder | 0.075 |
| Chicken powder (Ogawa & Co., Ltd.) | 3.750 |
| Onion extract powder (Ogawa & Co., Ltd.) | 2.500 |
| Water | - |
| Total | 1000.000 |

**[Table 7]**

| | | | | |
|---|---|---|---|---|
| Evaluation sample | | Addition Chicken Salty Metallic | | |

| | (ppm) | flavor | taste | taste |
|---|---|---|---|---|
| Quinic acid-containing composition (Prod. Ex. 2) | 5.0 | - | - | ++ |
| Shallot extract (Prod. Ex. 5) | 10.0 | - | - | + |
| Quinic acid-containing composition | 5.0 | | | |
| (Prod. Ex. 2) | | - | + | ++ |
| + Purified spilanthol (Prod. Ex. 4) | 0.1 | | | |
| Quinic acid-containing composition | 5.0 | | | |
| (Prod. Ex. 2) | | + | + | +++ |
| + Purified spilanthol (Prod. Ex. 4) | 0.1 | | | |
| + Shallot extract (Prod. Ex. 5) | 10.0 | | | |

As clearly shown in Table 7, addition of the quinic acid-containing composition, purified spilanthol and shallot extract as agents for improving taste according to the invention to reduced-sodium consomme soup produced taste-improving effects against the metallic taste characteristic of potassium chloride, and the salty taste and chicken flavor was slightly enhanced. On the other hand, no adverse effect was produced on the original chicken flavor of the reduced-sodium consomme soup.

### [Test Example 11] Ramen soup

To reduced-sodium ramen soup having the following formulation 4 there were added each of the agents for improving taste of Production Examples 2, 4 and 5 so that the contents of the quinic acid-containing composition (Production Example 2), purified spilanthol (Production Example 4) and shallot extract (Production Example 5) in the soup were as listed in Table 8, and an organoleptic evaluation was conducted by a panel of 10 experts based on the rating scale shown in Table 1, with a product containing no agent for improving taste according to the invention, as the control. The results are shown in Table 8.

### (Formulation 4)

| Ingredients | Content (g) |
|---|---|
| Powdered soy | 10.0 |
| Salt | 12.0 |
| Potassium chloride | 12.0 |
| Sugar | 8.0 |
| Seasoning (amino acids, etc.) | 5.7 |
| Dextrin | 32.2 |
| Chicken extract powder (Ogawa & Co., Ltd.) | 8.0 |
| Pork extract powder (Ogawa & Co., Ltd.) | 2.0 |
| Protein hydrolysate | 3.0 |
| Spice extract | 3.1 |
| Scallop extract powder | 3.0 |
| Total | 99.0 |

A 20 g portion of the powder above was dissolved in 500 g of hot water.

**[Table 8]**

| Evaluation sample | Addition (ppm) | Chicken flavor | Salty taste | Unpleasant taste |
|---|---|---|---|---|
| Quinic acid-containing composition (Prod. Ex. 2) | 5.0 | - | - | ++ |
| Purified spilanthol (Prod. Ex. 4) | 0.1 | - | + | + |
| Quinic acid-containing composition | 5.0 | | | |
| (Prod. Ex. 2) | | - | - | +++ |
| + Purified spilanthol prod. Ex. 4) | 0.1 | | | |
| Quinic acid-containing composition | 5.0 | | | |
| (Prod. Ex. 2) | | + | + | +++ |
| + Purified spilanthol (Prod. Ex. 4) | 0.1 | | | |
| + Shallot extract (Prod. Ex. 5) | 10.0 | | | |

As clearly shown in Table 8, addition of the quinic acid-containing composition, purified spilanthol and shallot extract as agents for improving taste according to the invention to reduced-sodium ramen soup produced taste-improving effects against the unpleasant taste characteristic of potassium chloride. On the other hand, virtually no adverse effect was noticed on the original chicken flavor of the reduced-sodium ramen soup, and the salty taste and chicken flavor was slightly enhanced when using the quinic acid-containing composition, purified spilanthol and shallot extract in combination. None of the panelists noticed any off-taste or off-flavor attributable to the invention products.

### [Test Example 12] Miso soup with pork

To reduced-sodium Miso soup with pork having the following formulation 5 there were added each of the agents for improving taste of Production Examples 2, 4 and 5 so that the contents of the quinic acid-containing composition (Production Examples 1 and 2), purified spilanthol (Production Example 4) and shallot extract (Production Example 5) in the soup were as listed in Table 9, and an organoleptic evaluation was conducted by a panel of 10 experts based on the rating scale shown in Table 1, with a product containing no agent for improving taste according to the invention, as the control. The results are shown in Table 9.

### (Formulation 5)

| Ingredients | Content (g) |
|---|---|
| Water | 450.0 |
| Miso | 65.0 |
| Potassium chloride | 10.0 |
| Pork | 150.0 |
| Tofu | 120.0 |
| Giant radish | 105.0 |
| Burdock | 75.0 |
| Carrot | 60.0 |
| Taro | 75.0 |
| Leek | 30.0 |
| Dried bonito extract (Ogawa & Co., Ltd.) | 4.0 |
| Tangle weed extract (Ogawa & Co., Ltd.) | 1.0 |
| Total | 1145.0 |

**[Table 9]**

| Evaluation sample | Addition (ppm) | Savor (umami) | Salty taste | Acrid taste |
|---|---|---|---|---|
| Quinic acid-containing composition (Prod. Ex. 2) | 5.0 | - | + | ++ |
| Shallot extract (Prod. Ex. 5) | 10.0 | ++ | + | + |
| Quinic acid-containing composition | 5.0 | | | |
| (Prod. Ex. 2) | | - | ++ | +++ |
| + Purified spilanthol (Prod. Ex. 4) | 0.1 | | | |
| Quinic acid-containing composition | 5.0 | | | |
| (Prod. Ex. 2) | | + | + | +++ |
| + Purified spilanthol (Prod. Ex. 4) | 0.1 | | | |
| + Shallot extract (Prod. Ex. 5) | 10.0 | | | |

As clearly shown in Table 9, addition of the quinic acid-containing composition, purified spilanthol and shallot extract as agents for improving taste according to the invention to reduced-sodium Miso soup with pork produced taste-improving effects against the acrid taste characteristic of potassium chloride. In addition, an enhancing effect was noticed on the salty taste and umami taste characteristic of Miso soup with pork.

### [Test Example 13] Minestrone

To reduced-sodium minestrone having the following formulation 6 there were added each of the agents for improving taste of Production Examples 1-5 so that the contents of the quinic acid-containing compositions (Production Examples 1 and 2), spilanthol (Production Examples 3 and 4) and shallot extract (Production Example 5) in the minestrone were as listed in Table 10, and an organoleptic evaluation was conducted by a panel of 10 experts based on the rating scale shown in Table 1, with a product containing no agent for improving taste according to the invention, as the control. The results are shown in Table 10.

### (Formulation 6)

| Ingredients | Content (g) |
|---|---|
| Tomato paste | 3.50 |
| Salt | 0.30 |
| Potassium chloride | 0.70 |
| High-fructose corn syrup | 0.90 |
| Corn oil | 0.84 |
| Beef extract (Ogawa & Co., Ltd.) | 0.80 |
| MSG | 0.40 |
| Chicken consomme | 0.30 |
| Xanthan gum | 0.20 |
| Paprika color | 0.06 |
| White pepper powder | 0.01 |
| Tomato seasoning powder (Ogawa & Co., Ltd.) | 0.20 |
| Onion sautee (Ogawa & Co., Ltd.) | 0.10 |
| Pizza spice oil (Ogawa & Co., Ltd.) | 0.02 |
| Bacon seasoning powder (Ogawa & Co., Ltd.) | 0.05 |
| Water | - |
| Total | 100.00 |

**[Table 10]**

| Evaluation sample | Addition (ppm) | Tomato flavor | Acidic taste | Unpleasant taste |
|---|---|---|---|---|
| Quinic acid-containing composition (Prod. Ex. 1) | 5.0 | + | - | ++ |
| Crude spilanthol (Prod. Ex. 3) | 0.1 | - | + | + |
| Quinic acid-containing composition | 5.0 | | | |
| (Prod. Ex. 2) | | + | + | +++ |
| + Purified spilanthol (Prod. Ex. 4) | 0.1 | | | |
| Quinic acid-containing composition (Prod. Ex. 2) | 5.0 | | | |
| + Purified spilanthol (Prod. Ex. 4) | 0.1 | ++ | + | +++ |
| + Shallot extract (Prod. Ex. 5) | 10.0 | | | |

As clearly shown in Table 10, addition of the quinic acid-containing composition, spilanthol and shallot extract as agents for improving taste according to the invention to reduced-sodium minestrone produced taste-improving effects against the unpleasant taste characteristic of potassium chloride. In addition, a slight enhancing effect was noticed on the tomato flavor and acidic taste characteristic of minestrone. On the other hand, none of the panelists noticed any off-taste or off-flavor attributable to the invention products.

### [Test Example 13] Cream stew

To reduced-sodium cream stew having the following formulation 7 there were added each of the agents for improving taste of Production Examples 1, 2, 4 and 5 so that the contents of the quinic acid-containing compositions (Production Examples 1 and 2), purified spilanthol (Production Example 4) and shallot extract (Production Example 5) in the stew were as listed in Table 11, and an organoleptic evaluation was conducted by a panel of 10 experts based on the rating scale shown in Table 1, with a product containing no agent for improving taste according to the invention, as the control. The results are shown in Table 11.

### (Formulation 7)

| Ingredients | Content (g) |
|---|---|
| Unsalted butter | 25.0 |
| Palm fat | 25.0 |
| Wheat flour | 50.0 |
| Milk | 500.0 |
| Water | - |
| White pepper powder | 0.3 |
| Chicken consomme | 2.4 |
| salt | 2.0 |
| Potassium chloride | 4.0 |
| Total | 1200.0 |

**[Table 11]**

| Evaluation sample | Addition (ppm) | Milk flavor | Sweet taste | Unpleasant taste |
|---|---|---|---|---|
| Quinic acid-containing composition (Prod. Ex. 1) | 5.0 | + | + | ++ |
| Quinic acid-containing composition (Prod. Ex. 2) | 5.0 | ++ | + | ++ |
| Purified spilanthol (Prod. Ex. 4) | 0.1 | - | - | + |
| Quinic acid-containing composition | 5.0 | | | |
| (Prod. Ex. 2) | | + | + | ++ |
| + Purified spilanthol (Prod. Ex. 4) | 0.1 | | | |
| Quinic acid-containing composition | 5.0 | | | |
| (Prod. Ex. 2) + Purified spilanthol (Prod. Ex. 4) | 0.1 | + | ++ | +++ |
| + Shallot extract (Prod. Ex. 5) | 10.0 | | | |

As clearly shown in Table 11, addition of the quinic acid-containing composition, purified spilanthol and shallot extract as agents for improving taste according to the invention to reduced-sodium cream stew produced taste-improving effects against the unpleasant taste characteristic of potassium chloride. Also, a slight enhancing effect was noticed on the milk flavor and sweet taste characteristic of cream stew.

### [Test Example 14] Meat sauce

To reduced-sodium meat sauce having the following formulation 8 there were added each of the agents for improving taste of Production Examples 1, 2, 4 and 5 so that the contents of the quinic acid-containing compositions (Production Examples 1 and 2), purified spilanthol (Production Example 4) and shallot extract (Production Example 5) in the meat sauce were as listed in Table 12, and an organoleptic evaluation was conducted by a panel of 10 experts based on the rating scale shown in Table 1, with a product containing no agent for improving taste according to the invention, as the control. The results are shown in Table 12.

### (Formulation 8)

| Ingredients | Content (g) |
|---|---|
| Edible fats and oils | 20.0 |
| Chopped onion | 200.0 |
| Carrot paste | 20.0 |
| Grated garlic | 2.0 |
| Mixed minced meat | 60.0 |
| Tomato paste | 70.0 |
| Salt | 2.0 |
| Potassium chloride | 3.0 |
| Refined white sugar | 15.0 |
| MSG | 2.0 |
| Black pepper | 0.3 |
| Nutmeg powder | 0.2 |
| Bay leaf powder | 0.1 |
| Tomato ketchup | 12.0 |
| Wheat flour | 30.0 |
| Red wine | 20.0 |
| Water | - |
| Total | 750.0 |

**[Table 12]**

| Evaluation sample | Addition (ppm) | Meat flavor | Tomato flavor | Metallic taste |
|---|---|---|---|---|
| Quinic acid-containing composition (Prod. Ex. 1) | 5.0 | - | + | ++ |
| Quinic acid-containing composition (Prod. Ex. 2) | 5.0 | - | + | ++ |
| Purified spilanthol (Prod. Ex. 4) | 0.1 | - | - | + |
| Quinic acid-containing composition | 5.0 | | | |
| (Prod. Ex. 2) | | - | + | ++ |
| + Purified spilanthol (Prod. Ex. 4) | 0.1 | | | |
| Quinic acid-containing composition | 5.0 | | | |
| (Prod. Ex. 2) | | + | ++ | +++ |
| + Purified spilanthol (Prod. Ex. 4) | 0.1 | | | |
| + Shallot extract (Prod. Ex. 5) | 10.0 | | | |

As clearly shown in Table 12, addition of the quinic acid-containing composition, purified spilanthol and shallot extract as agents for improving taste according to the invention to reduced-sodium meat sauce produced taste-improving effects against the metallic taste characteristic of potassium chloride. In addition, an enhancing effect was noticed on the tomato flavor characteristic of meat sauce. On the other hand, none of the panelists noticed any off-taste or off-flavor attributable to the invention products.

### Industrial Applicability

The agent for improving taste according to the invention can improve unpleasant tastes such as the metallic taste or acrid taste characteristic of potassium salts while enhancing salt flavor, without affecting the original flavor of foods or drinks, and therefore its use in reduced-sodium foods is easier than the prior art, and it can increase the value of potassium salts as salt substitutes.

## Claims

1. Use of an agent for improving the taste of potassium chloride or potassium chloride-containing foods and drinks, said agent comprising:
(a) quinic acid or quinic acid-containing compositions,
(b) spilanthol or spilanthol-containing plant extracts or plant essential oils, and optionally
(c) *Allium* plant extracts.

2. Use of an agent for improving taste according to claim 1, **characterized in that** the quinic acid-containing composition comprises a purified product obtained by first extracting tea leaves with water to obtain an extract, and then purifying the extract with an adsorbent.

3. Use of an agent for improving taste according to claim 2, wherein the tea leaves are black tea leaves.

4. Use of an agent for improving taste according to claim 1, **characterized in that** the quinic acid-containing composition comprises a coffee bean hydrolysate containing a quinic acid, obtained by hydrolysis of a coffee bean extract followed by purification of the hydrolysate.

5. Use of an agent for improving taste according to claim 1, **characterized in that** the spilanthol or spilanthol-containing plant extract or plant essential oil is an extract or essential oil derived from *Spilanthes acmella* or *Spilanthes* acmella var. *oleracea.*

6. Use of an agent for improving taste according to claim 1, **characterized in that** the *Allium* plant extract is an extract of shallot and/or onion.

7. Use of an agent for improving taste according to any one of claims 1 or 6, **characterized in that** the *Allium* plant extract is obtained by extraction from an *Allium* plant with an aqueous alcohol solution at -20 to 0°C.

8. A potassium chloride composition **characterized by** comprising an agent for improving taste comprising
(a) quinic acid or quinic acid-containing compositions,
(b) spilanthol or spilanthol-containing plant extracts or plant essential oils, and optionally
(c) *Allium* plant extracts.

9. A potassium chloride-containing food or drink **characterized by** comprising an agent for improving taste comprising
(a) quinic acid or quinic acid-containing compositions,
(b) spilanthol or spilanthol-containing plant extracts or plant essential oils, and optionally
(c) *Allium* plant extracts.

10. A potassium chloride -containing food or drink according to claim 9, wherein the potassium chloride -containing food or drink is a reduced-sodium food or drink.

11. A method for improving the taste of potassium chloride-containing foods or drinks, **characterized by** adding an agent for improving taste comprising
(a) quinic acid or quinic acid-containing compositions,
(b) spilanthol or spilanthol-containing plant extracts or plant essential oils, and optionally
(c) *Allium* plant extracts.

12. A flavoring composition for a potassium chloride-containing food or drink, **characterized by** comprising an agent for improving taste comprising
(a) quinic acid or quinic acid-containing compositions,
(b) spilanthol or spilanthol-containing plant extracts or plant essential oils, and optionally
(c) *Allium* plant extracts.

13. A potassium chloride-containing food or drink **characterized by** containing a flavoring composition according to claim 12.

14. A salt composition **characterized by** containing potassium chloride and an agent for improving taste comprising (a) quinic acid or quinic acid-containing compositions, (b) spilanthol or spilanthol-containing plant extracts or plant essential oils, and optionally (c) *Allium* plant extracts.

15. A food or drink containing a salt composition according to claim 14.

## Patentansprüche

1. Verwendung eines Mittels zum Verbessern des Geschmacks von Kaliumchlorid oder Kaliumchlorid-haltigen Nahrungsmitteln und Getränken, wobei das Mittel umfasst:
(a) Chinasäure oder Chinasäure-enthaltene Zusammensetzungen,
(b) Spilanthol oder Spilanthol-haltige Pflanzenextrakte oder pflanzliche ätherische Öle, und optional
(c) *Allium*-Pflanzenextrakte.

2. Verwendung eines Mittels zum Verbessern von Geschmack gemäß Anspruch 1, **dadurch gekennzeichnet, dass** die Chinasäure-enthaltene Zusammensetzung ein gereinigtes Produkt erhalten durch zunächst Extrahieren von Teeblättern mit Wasser, um ein Extrakt zu erhalten, und dann Aufreinigen des Extrakts mit einem Adsorber umfasst.

3. Verwendung eines Mittels zum Verbessern von Geschmack gemäß Anspruch 2, wobei die Teeblätter Schwarzteeblätter sind.

4. Verwendung eines Mittels zum Verbessern von Geschmack gemäß Anspruch 1, **dadurch gekennzeichnet, dass** die Chinasäure-enthaltene Zusammensetzung Kaffeebohnen-Hydrolysat umfasst, dass eine Chinasäure erhalten durch Hydrolyse eines Kaffeebohnenextrakts gefolgt durch Aufreinigung des Hydrolysats umfasst.

5. Verwendung eines Mittels zum Verbessern von Geschmack gemäß Anspruch 1, **dadurch gekennzeichnet, dass** das Spilanthol oder der Spilanthol-haltige Pflanzenextrakt oder das pflanzliche ätherische Öl ein Extrakt oder ätherisches Öl abgeleitet aus *Spilanthes acmella* oder *Spilanthes acmella* var. *oleracea* ist.

6. Verwendung eines Mittels zum Verbessern von Geschmack gemäß Anspruch 1, **dadurch gekennzeichnet, dass** der *Allium*-Pflanzenextrakt eines Extrakt aus einer Schalotte und/oder Zwiebel ist.

7. Verwendung eines Mittels zum Verbessern von Geschmack gemäß einem beliebigen der Ansprüche 1 bis 6, **dadurch gekennzeichnet, dass** das *Allium*-Pflanzenextrakt durch Extraktion aus einer *Allium*-Pflanze mittels einer wässrigen Alkohollösung bei
- 20 bis 0°C erhalten wird.

8. Kaliumchlorid-Zusammensetzung, **gekennzeichnet durch** das Umfassen eines Mittels zum Verbessern von Geschmack umfassend
(a) Chinasäure oder Chinasäure-enthaltene Zusammensetzungen,
(b) Spilanthol oder Spilanthol-haltige Pflanzenextrakte oder pflanzliche ätherische Öle, und optional
(c) *Allium*-Pflanzenextrakte.

9. Kaliumchlorid-enthaltenes Nahrungsmittel oder Getränk, **gekennzeichnet durch** das Umfassen eines Mittels zum Verbessern von Geschmack umfassend
(a) Chinasäure oder Chinasäure-enthaltene Zusammensetzungen,
(b) Spilanthol oder Spilanthol-haltige Pflanzenextrakte oder pflanzliche ätherische Öle, und optional
(c) *Allium*-Pflanzenextrakte.

10. Kaliumchlorid-enthaltenes Nahrungsmittel oder Getränk gemäß Anspruch 9, wobei das Kaliumchlorid-enthaltene Nahrungsmittel oder Getränk ein Natrium-reduziertes Nahrungsmittel oder Getränk ist.

11. Verfahren zum Verbessern des Geschmacks von Kaliumchlorid-enthaltenen Nahrungsmitteln oder Getränken, **gekennzeichnet durch** Zugabe eines Mittels zum Verbessern von Geschmack umfassend
(a) Chinasäure oder Chinasäure-enthaltene Zusammensetzungen,
(b) Spilanthol oder Spilanthol-haltige Pflanzenextrakte oder pflanzliche ätherische Öle, und optional
(c) *Allium*-Pflanzenextrakte.

12. Geschmacksstoff-Zusammensetzung für ein Kaliumchlorid-enthaltenes Nahrungsmittel oder Getränk, **gekennzeichnet durch** das Umfassen eines Mittels zum Verbessern von Geschmack umfassend
(a) Chinasäure oder Chinasäure-enthaltene Zusammensetzungen,
(b) Spilanthol oder Spilanthol-haltige Pflanzenextrakte oder pflanzliche ätherische Öle, und optional
(c) *Allium-*Pflanzenextrakte.

13. Kaliumchlorid-enthaltenes Nahrungsmittel oder Getränk, **gekennzeichnet durch** das Enthalten einer Geschmacksstoff-Zusammensetzung gemäß Anspruch 12.

14. Salzzusammensetzung, **gekennzeichnet durch** das Enthalten von Kaliumchlorid und eines Mittels zum Verbessern von Geschmack umfassend
(a) Chinasäure oder Chinasäure-enthaltene Zusammensetzungen,
(b) Spilanthol oder Spilanthol-haltige Pflanzenextrakte oder pflanzliche ätherische Öle, und optional
(c) *Allium*-Pflanzenextrakte.

15. Nahrungsmittel oder Getränk, enthaltend eine Salzzusammensetzung gemäß Anspruch 14.

## Revendications

1. Utilisation d'un agent pour améliorer le goût du chlorure de potassium ou de boissons ou aliments contenant du chlorure de potassium, ledit agent comprenant :
a) de l'acide quinique ou des compositions contenant de l'acide quinique,
b) du spilanthol ou des huiles essentielles de plante ou extrait de plante contenant du spilanthol, et éventuellement
c) des extraits de plantes du genre *Allium.*

2. Utilisation d'un agent pour améliorer le goût selon la revendication 1, **caractérisée en ce que** la composition contenant de l'acide quinique comprend un produit purifié obtenu d'abord par extraction de feuilles de thé avec de l'eau pour obtenir un extrait, puis par purification de l'extrait avec un adsorbant.

3. Utilisation d'un agent pour améliorer le goût selon la revendication 2, dans laquelle les feuilles de thé sont des feuilles de thé noir.

4. Utilisation d'un agent pour améliorer le goût selon la revendication 1, **caractérisée en ce que** la composition contenant de l'acide quinique comprend un hydrolysat de grain de café contenant de l'acide quinique, obtenu par hydrolyse d'un extrait de grains de café suivie d'une purification de l'hydrolysat.

5. Utilisation d'un agent pour améliorer le goût selon la revendication 1, **caractérisée en ce que** le spilanthol ou l'huile essentielle de plante ou l'extrait de plante contenant du spilanthol consistent en un extrait ou une huile essentielle extraite de Spilanthes acmella ou de Spilanthes acmella var. oleracea.

6. Utilisation d'un agent pour améliorer le goût selon la revendication 1, **caractérisée en ce que** l'extrait de plantes du genre *Allium* est un extrait d'échalote et/ou d'oignon.

7. Utilisation d'un agent pour améliorer le goût selon l'une quelconque des revendications 1 ou 6, **caractérisée en ce que** l'extrait de plante du genre *Allium* est obtenu par extraction d'une plante du genre *Allium* par une solution aqueuse d'alcool à une température de -20°C à 0°C.

8. Composition de chlorure de potassium **caractérisée en ce qu'**elle comprend un agent pour améliorer le goût comprenant :
a) de l'acide quinique ou des compositions contenant de l'acide quinique,
b) du spilanthol ou des huiles essentielles de plante ou extrait de plante contenant du spilanthol, et éventuellement
c) des extraits de plantes du genre *Allium.*

9. Un aliment ou une boisson contenant du chlorure de potassium **caractérisé en ce qu'**il comprend un agent pour améliorer le goût comprenant :
a) de l'acide quinique ou des compositions contenant de l'acide quinique,
b) du spilanthol ou des huiles essentielles de plante ou extrait de plante contenant du spilanthol, et éventuellement
c) des extraits de plantes du genre *Allium.*

10. Un aliment ou une boisson contenant du chlorure de potassium selon la revendication 9, dans lequel l'aliment ou la boisson contenant du chlorure de potassium est un aliment ou une boisson à teneur réduite en sodium.

11. Un procédé pour améliorer le goût des aliments ou des boissons contenant du chlorure de potassium, **caractérisé par** l'addition d'un agent améliorant le goût comprenant :
a) de l'acide quinique ou des compositions contenant de l'acide quinique,
b) du spilanthol ou des huiles essentielles de plante ou extrait de plante contenant du spilanthol, et éventuellement
c) des extraits de plantes du genre *Allium.*

12. Une composition aromatisante pour un aliment ou une boisson contenant du chlorure de potassium, **caractérisée en ce qu'**elle comprend un agent pour améliorer le goût comprenant :
a) de l'acide quinique ou des compositions contenant de l'acide quinique,
b) du spilanthol ou des huiles essentielles de plante ou extrait de plante contenant du spilanthol, et éventuellement
c) des extraits de plantes du genre *Allium.*

13. Un aliment ou une boisson contenant du chlorure de potassium **caractérisé par** une composition aromatisante selon la revendication 12.

14. Une composition de sel **caractérisée en ce qu'**elle contient du chlorure de potassium et un agent pour améliorer le goût comprenant :
a) de l'acide quinique ou des compositions contenant de l'acide quinique,
b) du spilanthol ou des huiles essentielles de plante ou extrait de plante contenant du spilanthol, et éventuellement
c) des extraits de plantes du genre *Allium.*

15. Un aliment ou une boisson contenant une composition de sel selon la revendication 14.
